# EUROPÄISCHE PATENTSCHRIFT

(11) **EP 3 617 133 B1**
(45) Veröffentlichungstag und Bekanntmachung des Hinweises auf die Patenterteilung: **17.11.2021**
(21) Anmeldenummer: 18192281.6
(22) Anmeldetag: 03.09.2018
(51) Int. Cl.: B67C 3/28, G01N 21/25, G01F 23/292

(54) **SENSORANORDNUNG**
SENSOR ASSEMBLY
SYSTÈME DE DÉTECTION

(43) Veröffentlichungstag der Anmeldung: 04.03.2020
(73) Patentinhaber: Leuze electronic GmbH + Co. KG, 73277 Owen/Teck (DE)
(72) Erfinder: Graf von Pfeil und Klein-Ellguth, Albrecht, Dr., 73230 Kirchheim unter Teck (DE); Eberle, Andreas, 73252 Lenningen (DE); Merk, Thomas, 73257 Köngen (DE); Schneider, Manfred, 89150 Laichingen (DE)
(74) Vertreter: Ruckh, Rainer Gerhard

(56) Entgegenhaltungen:
- EP-A1- 1 176 416
- DE-A1- 2 211 594
- US-A- 3 454 759
- US-A1- 2007 107 801

## Beschreibung

Die Erfindung betrifft eine Sensoranordnung und ein Verfahren zur Kontrolle von Füllhöhen von mit Flüssigkeit befüllten Behältern.

In Produktionsanlagen, insbesondere in Getränkeabfüllanlagen werden Behälter, insbesondere Flaschen, in automatisierten Prozessen mit Flüssigkeiten befüllt. Bei den Flüssigkeiten handelt es sich zum Beispiel um Getränke wie Mineralwasser, Säfte, Biere und dergleichen.

Eine wesentliche Voraussetzung für eine kontrollierte, automatisierte Abfüllung von Behältern, insbesondere Flaschen, ist eine zuverlässige Füllstandskontrolle. Derartige Füllstandskontrollsysteme können beispielsweise mit Distanzsensoren oder Kamerasystemen ausgestattet sein. Nachteilig bei derartigen Systemen ist, dass die Sensorik aufwändig und teuer ist.

Ein weiteres Problem besteht darin, dass sich beim Abfüllen der Flüssigkeiten auf deren Oberflächen Schaum bilden kann. Bei bekannten Messsystemen kann die Schaumschicht nicht sicher von der Flüssigkeit im Behälter unterschieden werden, sodass keine zuverlässige Füllstandskontrolle mehr möglich ist.

Die US 3 454 759 betrifft eine Vorrichtung zur Füllstandskontrolle vor Flaschen gemäß dem Oberbegriff des Anspruchs 1.

Die Vorrichtung umfasst als Lichtquelle eine Lampe, die sichtbares Licht und Infrarotlicht emittiert. Weiterhin sind zwei Empfänger vorgesehen, die Licht unterschliedlicher Wellenlängen detektieren. Über einen Spiegel wird das Licht der Lampe über eine zu detektierende Flasche den Empfängern zugeführt.

Die US 2007/0107801 A1 betrifft eine Vorrichtung zur Füllstandskontrolle von Flaschen. Die Vorrichtung weist insbesondere eine optische Sensoranordnung auf. Die Sensoranordnung weist eine Sendeeinheit auf, die Sender umfasst, die Licht mit unterschiedlichen Wellenlängen emittieren. Die Sensoranordnung kann als Kamerasystem ausgebildet sein.

Die EP 1 176 416 A1 betrifft eine Sensoranordnung zur Detektion von Füllstandshöhen in Flaschen. Die Sensoranordnung weist eine Beleuchtungseinheit mit mehreren Sendeelementen und eine Empfangseinheit auf. Die Bestimmung des Füllstands erfolgt in einer Reflexionsmessung.

Die DE 22 11 594 A1 betrifft eine Füllhöhenprüfvorrichtung für Behälter, bei der Flaschen durch einen Prüfbereich gefördert und dabei durch mindestens einen Sensor abgetastet werden. Außerhalb der Bewegungsbahn der Behälter ist mindestens ein auf das Füllgut ansprechender kapazitiver elektronischer Geber angeordnet.

Der Erfindung liegt die Aufgabe zugrunde eine Sensoranordnung bereitzustellen mittels derer bei geringem konstruktiven Aufwand eine sichere und zuverlässige Kontrolle von Füllhöhen von mit Flüssigkeiten befüllten Behältern ermöglicht wird.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Sensoranordnung zur Kontrolle von Füllhöhen von mit Flüssigkeiten befüllten Behältern. Eine erste und eine zweite Lichtschranke sind vorgesehen, die relativ zu einem in einer Detektionsposition befindlichen Behälter jeweils in einer Detektionshöhe angebracht sind, die an eine Soll-Füllhöhe dieses Behälters angepasst ist. Die erste Lichtschranke emittiert Lichtstrahlen mit einer Lichtwellenlänge, welche für die Flüssigkeit eine signifikant größere Absorption aufweist als die von der zweiten Lichtschranke bei einer zweiten Lichtwellenlänge emittierten Lichtstrahlen. Bei der Detektion des Behälters erfolgt in einer Auswerteeinheit eine gemeinsame Auswertung von in den Lichtschranken generierten Empfangssignalen oder daraus abgeleiteten Signalen. Eine oder jede Lichtschranke ist als Reflexionslichtschranke mit einem Sender, einem Empfänger und einem Reflektor ausgebildet. Der Behälter ist zwischen dem Sender und dem Empfänger einerseits und dem Reflektor andererseits angeordnet. Die Lichtstrahlen kreuzen sich in einem Kreuzungspunkt, wobei der Kreuzungspunkt im Bereich des Behälters liegt.

Die Erfindung betrifft weiterhin ein entsprechendes Verfahren.

Der Grundgedanke der Erfindung besteht darin, die Sensoranordnung mit zwei Lichtschranken auszustatten, deren Lichtstrahlen Lichtwellenlängen ein unterschiedliches Absorptionsverhalten aufweisen.

Während die Lichtstrahlen der ersten Lichtschranken von der zu detektierenden Flüssigkeit stark absorbiert werden, werden die Lichtstrahlen der zweiten Lichtschranken von der zu detektierenden Flüssigkeit nur schwach absorbiert.

Die zu detektierende Flüssigkeit ist bevorzugt wasserhaltig. Beispielsweise handelt es sich bei derartigen Flüssigkeiten um Getränke wie Säfte oder Biere.

Die Lichtwellenlänge der Lichtstrahlen der ersten Lichtschranke liegt daher innerhalb einer Absorptionsbande der insbesondere wasserhaltigen Flüssigkeit, während die Lichtwellenlänge der Lichtstrahlen der zweiten Lichtschranke außerhalb dieser Absorptionsbande liegt.

Die Lichtschranken sind dabei jeweils in einer Detektionshöhe angebracht, die an eine Soll-Füllhöhe eines in einer Detektionsposition befindlichen Behälters angepasst sind, so dass die Lichtstrahlen beider Lichtschranken den Behälter durchsetzen.

Vorteilhaft verlaufen dabei die Strahlachsen der Lichtstrahlen beider Lichtschranken zumindest näherungsweise senkrecht zur Längsachse des Behälters.

Somit wird die Flüssigkeit im Behälter dadurch erkannt, dass die Lichtstrahlen der Lichtschranke die Flüssigkeit in horizontaler Richtung durchsetzen.

Vorteilhaft sind die Lichtschranken in derselben Detektionshöhe angeordnet.

Gemäß einer ersten Variante kann die Detektionshöhe dicht oberhalb der Soll-Füllhöhe angeordnet sein. Wird dann mit den Lichtschranken Flüssigkeit im Behälter detektiert, wird eine Überfüllung des Behälters festgestellt.

Gemäß einer zweiten Variante liegt die Detektionshöhe der Lichtschranke dicht unterhalb der Soll-Füllhöhe. Wird dann mit den Lichtschranken, dass keine Flüssigkeit vorliegt, liegt eine Unterfüllung der Behälter vor.

Prinzipiell können bei der erfindungsgemäßen Sensoranordnung auch mehrere Paare von ersten und zweiten Lichtschranken in unterschiedlichen Detektionshöhen vorgesehen sein.

Mit den beiden Lichtschranken kann somit die Füllhöhe der Behälter zuverlässig kontrolliert werden, wobei hierzu für eine hohe Detektionssicherheit die von den beiden Lichtschranken generierten Empfangssignale oder daraus abgeleitete Signale in einer Auswerteeinheit gemeinsam ausgewertet werden.

Gemäß einer ersten Variante sind in den Lichtschranken generierte analoge Empfangssignale der Auswerteeinheit zugeführt.

Die analogen Empfangssignale der Lichtschranken liefern ein direktes Maß für die Schwächung der Lichtstrahlen und damit eine Information, ob im Strahlengang der Lichtschranken Flüssigkeit und/oder Schaum vorhanden ist.

Durch eine gemeinsame Auswertung, insbesondere einem Vergleich, eine Differenz- oder Quotientenbildung der Empfangssignale, kann die Füllhöhe des Behälters zuverlässig bestimmt werden.

Gemäß einer zweiten Variante werden in den Lichtschranken in Abhängigkeit der Empfangssignale Schaltsignale generiert. Die Schaltsignale sind der Auswerteeinheit zugeführt und dort logisch verknüpft.

Die binären Schaltsignale werden generell durch eine Schwellwertbewertung der jeweils empfangenen Lichtmenge, das heißt der analogen Empfangssignale, erhalten.

Die Schaltsignale nehmen dabei generell die Schaltzustände "Transmission", die bei einer geringen Schwächung der Lichtstrahlen erhalten werden, und "keine Transmission", die bei einer starken Schwächung der Lichtstrahlen erhalten werden, an.

Durch die logische Verknüpfung der Schaltsignale beider Lichtschranken wird auch dann eine sichere Füllhöhenbestimmung ermöglicht, wenn die Schaltsignale der einzelnen Lichtschranken selbst keine sichere Information liefern, ob eine Flüssigkeit vorhanden ist oder nicht.

Dies gilt insbesondere dann, wenn sich auf der Oberfläche der im Behälter befindlichen Flüssigkeit Schaum befindet. Dieser kann sich typischerweise beim automatisierten Befüllen der Behälter mit Flüssigkeiten wie Säften oder Bieren bilden.

Bedingt durch das unterschiedliche Absorptionsverhalten der Lichtstrahlen liefern die Lichtschranken unterschiedliche Schaltsignale.

Die erste Lichtschranke, deren Lichtstrahlen von der Flüssigkeit stark absorbiert werden, liefert bei Detektion der Flüssigkeit ein Schaltsignal "keine Transmission", da die Lichtstrahlen von der Flüssigkeit stark geschwächt werden. Dagegen generiert die erste Lichtschranke ein Schaltsignal "Transmission", wenn keine Flüssigkeit vorliegt. Bei der Detektion von Schaum ist dagegen das Schaltsignal unbestimmt.

Die zweite Lichtschranke, deren Lichtstrahlen von der Flüssigkeit nur schwach absorbiert werden, zeigt ein anderes Schaltverhalten. Die erste Lichtschranke generiert sowohl dann, wenn die Lichtstrahlen die Flüssigkeit detektieren oder wenn keine Flüssigkeit vorliegt, das Schaltsignal "Transmission". Dagegen generiert die zweite Lichtschranke das Schaltsignal "keine Transmission", wenn dessen Lichtstrahlen Schaum auf der Flüssigkeit detektieren.

Durch die logische Verknüpfung der Schaltsignale kann somit sicher unterschieden werden, ob eine Flüssigkeit, Schaum oder keine Flüssigkeit vorliegt. Dadurch kann die Füllhöhe im Behälter sicher und reproduzierbar bestimmt werden.

Erfindungsgemäß ist eine oder jede Lichtschranke als Reflexionslichtschranke mit einem Sender, einem Empfänger und einem Reflektor ausgebildet. Der Behälter zwischen dem Sender und des Empfängers ist einerseits und dem Reflektor andererseits angeordnet.

Bei beiden Ausgestaltungen schneiden sich die Lichtstrahlen in einem Kreuzungspunkt, wobei der Kreuzungspunkt im Bereich des Behälters liegt.

In diesem Fall bilden die optischen Komponenten beider Lichtschranken separate Einheiten.

Alternativ oder zusätzlich können die Strahlachsen der Lichtstrahlen beider Lichtschranken parallel verlaufen.

In diesem Fall können optische Komponenten beider Lichtschranken jeweils in einem gemeinsamen Gehäuse angeordnet sein und somit eine Baueinheit bilden.

Um eine gegenseitige Beeinflussung beider Lichtschranken und dadurch bedingte Fehldetektionen zu vermeiden kann jede Lichtschranke einen Sperrfilter aufweisen, der Licht mit der Lichtwellenlänge der jeweils anderen Lichtschranke sperrt.

Alternativ oder zusätzlich können die Sender alternierend aktiviert sein. Dies erfolgt über eine Steuerung, die den Betrieb der Lichtschranke steuert.

Vorteilhaft kann diese Steuerung auch die Auswerteeinheit bilden.

Alternativ oder zusätzlich sind mittels der Steuerung die Lichtschranken alternierend aktiviert.

Damit wird eine zu der Anordnung, der Lichtschranken völlig unabhängige Steuerung der Sensoranordnung und auch Auswertung der Signale der Sensoranordnung für eine Füllstandskontrolle der Behälter ermöglicht.

Auch kann eine Parametrierung der Sensoranordnung, insbesondere der Lichtschranken räumlich entkoppelt über die Cloud erfolgen, wobei hierzu Parameter der Sensoranordnung in einem Cloudspeicher abgelegt sind und dort bei Bedarf geändert werden können.

Natürlich ist auch eine Parametrierung über die Steuerung oder durch Einstellmittel wie Potentiometer direkt an den Lichtschranken möglich.

Typische Parameter sind dabei die Sendeleistungen der Sender der Lichtschranken beziehungsweise die Empfangsverstärkungen der Empfänger oder die Einstellung von Schwellwerten zur Bewertung der Empfangssignale der Empfänger, welche zur Generierung der binären Schallsignale verwendet werden.

Die erfindungsgemäße Sensoranordnung wird vorteilhaft in automatisierten Anlagen, insbesondere Abfüllanlagen zur Befüllung von Behältern, insbesondere Flaschen mit Flüssigkeiten eingesetzt.

Durch die Parametriermöglichkeiten können während des Betriebs der Anlage Parameter der Lichtschranke nachgeführt werden. Weiterhin ist es auch möglich, abhängig von den Signalen der Sensoranordnung Produktionsparameter der Anlage selbsttätig nachzuführen. Wird beispielsweise mit den Lichtschranken der Sensoranordnung fortlaufend einer Überfüllung oder Unterfüllung der Behälter festgestellt, können dementsprechend der Füllwerte oder die Füllgeschwindigkeit bei der Befüllung der Behälter mit Flüssigkeit angepasst werden.

Die Erfindung wird im Folgenden anhand der Zeichnungen erläutert. Es zeigen
- Figur 1: Schematische Darstellung eines Ausführungsbeispiels der erfindungsgemäßen Sensoranordnung zur Kontrolle der Befüllung einer Flasche mit Flüssigkeit a) bei Überfüllung der Flasche b) bei korrekter Befüllung der Flasche
- Figur 2: Ausführungsbeispiel einer Sensoranordnung mit Reflexionslichtschranke
- Figur 3: nicht erfindungsgemäßes Ausführungsbeispiel einer Sensoranordnung mit Einweglichtschranke
- Figur 4: Blockschaltbild von Komponenten der Sensoranordnung gemäß Figur 1

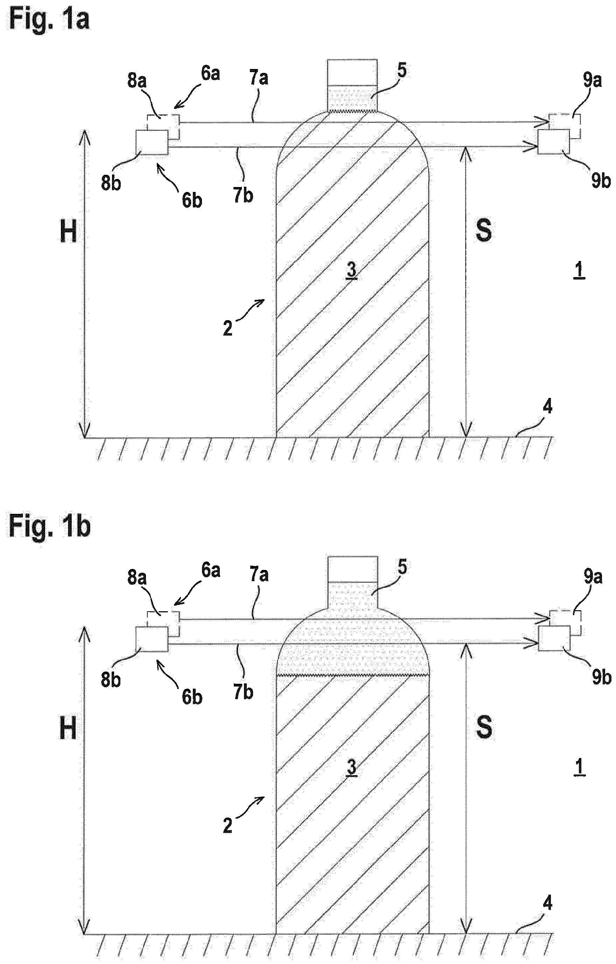

Die Figuren 1a, 1b zeigen schematisch im Ausführungsbeispiel der erfindungsgemäßen Sensoranordnung 1 zur Kontrolle der Befüllung von Behältern in Form von Flaschen 2 mit wasserhaltigen Flüssigkeiten 3, insbesondere Getränken. Die Sensoranordnung 1 ist dabei Bestandteil einer automatisierten Abfüllanlage für Flaschen 2.

Die Figuren 1a und 1b zeigen eine Flasche 2 auf einen Untergrund 4 stehend in einer Detektionsposition, in der die Flasche 2 mit der Sensoranordnung 1 zur Kontrolle der Füllhöhe der Flüssigkeit 3 detektiert wird.

Bei korrekter Befüllung ist die Flasche 2 bis zu einer Soll-Füllhöhe S befüllt. Dies zeigt Figur 1b. Figur 1a zeigt eine Flasche 2, bei der eine Überfüllung mit Flüssigkeit 3 vorliegt. Wie die Figuren 1a und 1b zeigen, entsteht bei den Abfüllungen der Flasche 2 eine Schaumschicht 5 bei Befüllen der Flasche 2.

Die Sensoranordnung 1 umfasst zwei Lichtschranken 6a, 6b die bei der Ausführungsform der Figuren 1a, 1b als Einweglichtschranken ausgebildet sind. Die Lichtschranken 6a 6b weisen jeweils einen Lichtstrahlen 7a, 7b emittierenden Sender 8a, 8b und einen Lichtstrahlen 7a, 7b empfangenden Empfänger 9a, 9b auf. Dem Empfänger 9a, 9b ist ein nicht dargestellter Prozessor zugeordnet, der durch eine Schwellwertbewertung der Empfangssignale ein binäres Schaltsignal generiert. Die Schaltzustände des jeweiligen Schaltsignals einer Lichtschranke 6a, 6b weisen zwei Schaltzustände auf. Ein erster Schaltzustand "Transmission" wird erhalten, wenn die Lichtstrahlen 7a, 7b nicht oder wenig bei Passieren des Überwachungsbereichs zwischen Sender 8a, 8b und Empfänger 9a, 9b geschwächt werden. Ein zweiter Schaltzustand "keine Transmission" liegt vor, wenn die Lichtstrahlen 7a, 7b bei Passieren des Überwachungsbereichs stark geschwächt werden.

Die Sender 8a, 8b und der Empfänger 9a, 9b beider Lichtschranken 6a, 6b liegen jeweils in einer Detektionshöhe H, die dicht oberhalb der Füllhöhe S liegt, sodass mit den Lichtschranken 6a, 6b eine Überfüllung der Flaschen 2 erfasst werden kann.

Prinzipiell kann die Detektionshöhe auch geringfügig unter der Soll-Füllhöhe liegen. In diesem Fall können Unterteilungen der Flaschen 2 mit den Lichtschranken 6a, 6b der Sensoranordnung 1 festgestellt werden.

Wie die Figuren 1a, 1b zeigen, verlaufen die Lichtstrahlen 7a, 7b beider Lichtschranken 6a, 6b in horizontaler Richtung und damit senkrecht zur Längsachse der Flasche 2 in der Detektionsposition. Die Sender 8a, 8b und Empfänger 9a, 9b der Lichtschranke 6a, 6b sind beidseits der Flasche 2 angeordnet, sodass die von den Sendern 8a, 8b emittierten Lichtschranken 6a, 6b die Flasche 2 durchdringen bevor sie zum zugeordneten Empfänger 9a, 9b gelangen.

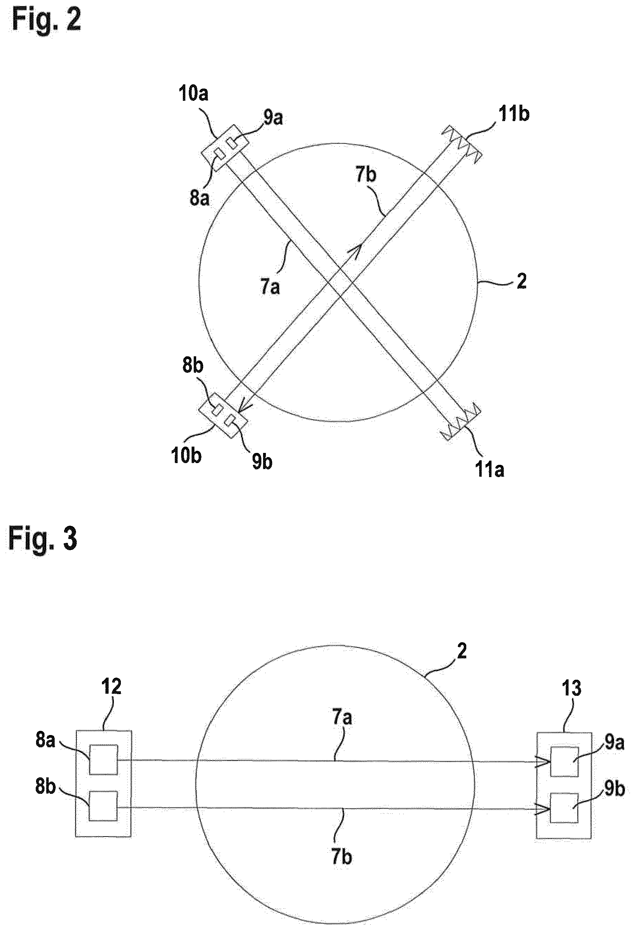

Die Figuren 2 und 3 zeigen Varianten der Lichtschrankenanordnungen gemäß den Figuren 1a, 1b, wobei in den Figuren 2 und 3 jeweils die Flasche 2 in einem Querschnitt und Höhe der Detektionshöhe dargestellt ist.

Figur 2 zeigt zwei als Reflexionslichtschranken ausgebildete Lichtschranken 6a, 6b. Der Sender 8a, 8b und Empfänger 9a, 9b sind jeweils in einem gemeinsamen Gehäuse 10a, 10b angeordnet. Diese Gehäuse 10a, 10b sind in einer Seite der Flasche 2 angeordnet, während auf der gegenüberliegenden Seite der Flasche 2 ein Reflektor 11a, 11b angeordnet ist.

Die Lichtstrahlen 7a, 7b einer Lichtschranke 6a, 6b werden durch die Flasche 2 zum Reflektor 11a, 11b und von diesem zurück zum Empfänger 9a, 9b geführt. Wie aus Figur 2 ersichtlich, kreuzen sich die Lichtstrahlen 7a, 7b beider Reflexionslichtschranken in einem Kreuzungspunkt im Zentrum der Flasche 2.

Figur 3 zeigt eine nicht erfindungsgemäße Ausführungsform, die weitgehend der Anordnung der Figuren 1a, 1b entspricht. Die Lichtschranken 6a, 6b sind als Einweglichtschranken ausgebildet. Dabei sind die Sender 8a, 8b beider Lichtschranken 6a, 6b in einem ersten Gehäuse 12 und die Empfänger 9a, 9b beider Lichtschranken 6a, 6b in einem zweiten Gehäuse 13 angeordnet.

Erfindungsgemäß liegen die Lichtwellenlängen der Lichtstrahlen 7a der ersten Lichtschranke 6a in einem Wellenlängenbereich, in welchem Lichtstrahlen 7a, 7b von der Flüssigkeit 3 stark absorbiert werden.

Demgegenüber liegen die Lichtwellenlängen der Lichtstrahlen 7b der zweiten Lichtschranke 6b in einem Wellenlängenbereich, in welchem die Lichtstrahlen 7a, 7b von der Flüssigkeit 3 schwach absorbiert werden.

Aufgrund dessen ergibt sich ein unterschiedliches Schaltverhalten der beiden Lichtschranken 6a, 6b.

Die erste Lichtschranke 6a, deren Lichtstrahlen 7a von der Flüssigkeit 3 stark absorbiert werden, liefert ein Schaltsignal "keine Transmission", da die Lichtstrahlen 7a von der Flüssigkeit 3 stark geschwächt werden. Dagegen generiert die erste Lichtschranke 6a ein Schaltsignal "Transmission", wenn keine Flüssigkeit 3 vorliegt. Bei der Detektion von Schaum ist dagegen das Schaltsignal unbestimmt.

Die zweite Lichtschranke 6b, deren Lichtstrahlen 7b von der Flüssigkeit 3 nur schwach absorbiert werden, zeigt ein anderes Schaltverhalten. Die zweite Lichtschranke 6b generiert sowohl dann, wenn die Lichtstrahlen 7b die Flüssigkeit 3 detektieren oder wenn keine Flüssigkeit 3 vorliegt, das Schaltsignal "Transmission". Dagegen generiert die zweite Lichtschranke 6b das Schaltsignal "keine Transmission" wenn deren Lichtstrahlen 7b Schaum auf der Flüssigkeit 3 detektieren.

Durch die logische Verknüpfung der Schaltsignale beider Lichtschranken 6a, 6b kann somit sicher unterschieden werden, ob eine Flüssigkeit 3, Schaum oder keine Flüssigkeit 3 vorliegt. Dadurch kann die Füllhöhe im Behälter sicher und reproduzierbar bestimmt werden.

Diese logische Verknüpfung erfolgt in einer Auswerteeinheit.

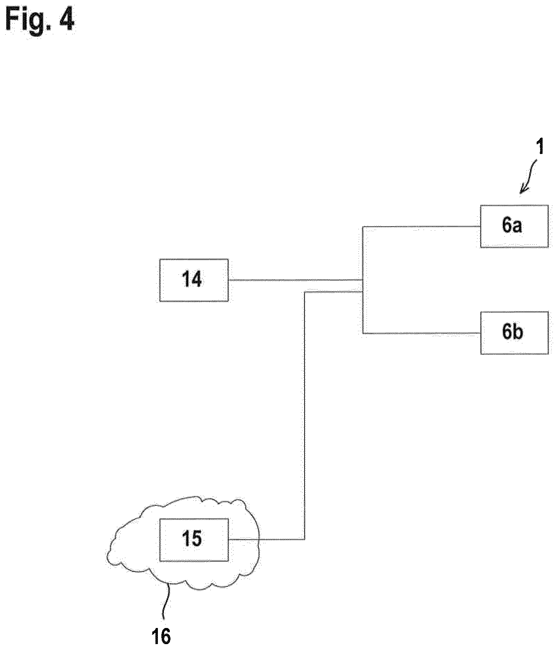

Figur 4 zeigt ein Blockschaltbild der Sensoranordnung 1 mit dieser zugeordneten Komponenten. Die Lichtschranken 6a, 6b der Sensoranordnung 1 sind einerseits an eine Steuerung 14 und andererseits an einer Rechnereinheit 15 einer Cloud 16 angeschlossen.

Die Steuerung 14 steuert den Betrieb beider Lichtschranken 6a, 6b, insbesondere deren Senderbetrieb. Zur Vermeidung gegenseitiger Beeinflussungen beider Lichtschranken 6a, 6b kann die Steuerung 14 die Sender 8a, 8b alternierend aktivieren. Alternativ oder zusätzlich kann zur Vermeidung gegenseitiger Beeinflussungen jede Lichtschranke 6a, 6b ein Sperrfilter aufweisen, der Licht mit der Lichtwellenlänge der jeweils anderen Lichtschranke 6a, 6b sperrt.

Im vorliegenden Fall bildet die Steuerung 14 auch die Auswerteeinheit.

Alternativ kann auch die oder eine Rechnereinheit 15 der Cloud die Auswerteeinheit bilden.

Weiterhin können die Steuerung 14 und/oder die Rechnereinheit 15 der Cloud 16 für Parametrierungen verwendet werden. Hierzu sind Parameterwerte der Sensoranordnung 1 in der Steuerung 14 und in einer Speichereinheit der Rechnereinheit 15 der Cloud 16 hinterlegt. Zur Optimierung des Betriebs der Sensoranordnung 1 können somit Parameter der Sensoranordnung 1 geändert werden. Weiterhin ist es auch möglich, abhängig von den Signalen der Sensoranordnung 1 Produktionsparameter der Anlage selbsttätig nachzuführen. Wird beispielsweise mit den Lichtschranken 6a, 6b der Sensoranordnung 1 fortlaufend eine Überfüllung oder Unterfüllung der Flaschen 2 festgestellt, können dementsprechend der Fülldruck oder die Füllgeschwindigkeit bei der Befüllung der Flaschen 2 mit Flüssigkeit 3 angepasst werden.

### Bezugszeichenliste

- (1): Sensoranordnung
- (2): Flasche
- (3): Flüssigkeit
- (4): Untergrund
- (5): Schaumschicht
- (6a, b): Lichtschranke
- (7a, b): Lichtstrahl
- (8a, b): Sender
- (9a, b): Empfänger
- (10a, b): Gehäuse
- (11a, b): Reflektor
- (12): Gehäuse
- (13): Gehäuse
- (14): Steuerung
- (15): Rechnereinheit
- (16): Cloud

## Patentansprüche

1. Sensoranordnung (1) zur Kontrolle von Füllhöhen von mit Flüssigkeiten (3) befüllten Behältern, wobei eine erste und eine zweite Lichtschranke (6a, 6b) vorgesehen sind, die relativ zu einem in einer Detektionsposition befindlichen Behälter jeweils in einer Detektionshöhe H angebracht sind, die an eine Soll-Füllhöhe S dieses Behälters angepasst ist, wobei die erste Lichtschranke (6a) Lichtstrahlen (7a) mit einer Lichtwellenlänge emittiert, welche für die Flüssigkeit (3) eine signifikant größere Absorption aufweist, als die von der zweiten Lichtschranke (6b) bei einer zweiten Lichtwellenlänge emittierten Lichtstrahlen (7b) und wobei bei der Detektion des Behälters in einer Auswerteeinheit eine gemeinsame Auswertung von in den Lichtschranken (6a, 6b) generierten Empfangssignalen oder daraus abgeleiteten Signalen erfolgt, **dadurch gekennzeichnet dass** eine oder jede Lichtschranke (6a, 6b) als Reflexionslichtschranke mit einem Sender (8a, 8b), einem Empfänger (9a, 9b) und einem Reflektor (11a, 11b) ausgebildet ist, wobei der Behälter zwischen dem Sender (8a, 8b) und dem Empfänger (9a, 9b) einerseits und dem Reflektor (11a, 11b) andererseits angeordnet ist, wobei sich die Lichtstrahlen (7a, 7b) in einem Kreuzungspunkt kreuzen, wobei der Kreuzungspunkt im Bereich des Behälters liegt.

2. Sensoranordnung (1) nach Anspruch 1, **dadurch gekennzeichnet, dass** in den Lichtschranken (6a, 6b) generierte analoge Empfangssignale der Auswerteeinheit zugeführt sind.

3. Sensoranordnung (1) nach Anspruch 1, **dadurch gekennzeichnet, dass** in den Lichtschranken (6a, 6b) in Abhängigkeit der Empfangssignale Schaltsignale generiert werden, wobei die Schaltsignale der Auswerteeinheit zugeführt und dort logisch verknüpft sind.

4. Sensoranordnung (1) nach einem der Ansprüche 1 ― 3, **dadurch gekennzeichnet, dass** die Lichtschranken (6a, 6b) in derselben Detektionshöhe H angeordnet sind.

5. Sensoranordnung (1) nach einem der Ansprüche 1 ― 4, **dadurch gekennzeichnet, dass** die Lichtschranken (6a, 6b) in einer Detektionshöhe H angeordnet sind, die dicht oberhalb oder unterhalb der Soll-Füllhöhe S liegt.

6. Sensoranordnung (1) nach einem der Ansprüche 1 ― 5, **dadurch gekennzeichnet, dass** die Strahlenachsen der Lichtstrahlen (7a, 7b) beider Lichtschranken (6a, 6b) zumindest näherungsweise senkrecht zur Längsachse des Behälters verlaufen.

7. Sensoranordnung (1) nach einem der Ansprüche 1 ― 8, **dadurch gekennzeichnet, dass** jede Lichtschranke (6a, 6b) ein Sperrfilter aufweist, der Licht mit der Lichtwellenlänge der jeweils anderen Lichtschranke (6a, 6b) sperrt.

8. Sensoranordnung (1) nach einem der Ansprüche 1-7, **dadurch gekennzeichnet, dass** mittels einer Steuerung die Lichtschranken (6a, 6b) alternierend aktiviert sind.

9. Sensoranordnung (1) nach Anspruch 8, **dadurch gekennzeichnet, dass** die Steuerung die Auswerteeinheit bildet.

10. Sensoranordnung (1) nach einem der Ansprüche 9, **dadurch gekennzeichnet, dass** die Auswerteeinheit von einer Rechnereinheit einer Cloud gebildet ist.

11. Sensoranordnung (1) nach einem der Ansprüche 9 oder 10, **dadurch gekennzeichnet, dass** die Lichtschranken (6a, 6b) über die Steuerung oder die Rechnereinheit der Cloud parametrierbar sind.

12. Sensoranordnung (1) nach einem der Ansprüche 1 ― 11, **dadurch gekennzeichnet, dass** mehrere Paare von ersten und zweiten Lichtschranken (6a, 6b) in unterschiedlichen Detektionshöhen H vorgesehen sind.

13. Verfahren zur Kontrolle von Füllhöhen von mit Flüssigkeit (3) befüllten Behältern mittels einer Sensoranordnung (1), wobei eine erste und zweite Lichtschranke (6a, 6b) vorgesehen sind, die relativ zu einem in einer Detektionsposition befindlichen Behälter jeweils in einer Detektionshöhe H angebracht sind, die an eine Soll-Füllhöhe S dieses Behälters angepasst ist, wobei die erste Lichtschranke (6a) Lichtstrahlen (7a, 7b) mit einer Lichtwellenlänge emittiert, welche für die Flüssigkeit (3) eine signifikant größere Absorption aufweist, als die von der zweiten Lichtschranke (6b) bei einer zweiten Lichtwellenlänge emittierten Lichtstrahlen (7b) und wobei bei der Detektion des Behälters in einer Auswerteeinheit eine gemeinsame Auswertung von in den Lichtschranken (6a, 6b) generierten Empfangssignalen oder daraus abgeleiteten Signalen erfolgt, **dadurch gekennzeichnet dass** eine oder jede Lichtschranke (6a, 6b) als Reflexionslichtschranke mit einem Sender (8a, 8b), einem Empfänger (9a, 9b) und einem Reflektor (11a, 11b) ausgebildet ist, wobei der Behälter zwischen dem Sender (8a, 8b) und dem Empfänger (9a, 9b) einerseits und dem Reflektor (11a, 11b) andererseits angeordnet ist, wobei sich die Lichtstrahlen (7a, 7b) in einem Kreuzungspunkt kreuzen, wobei der Kreuzungspunkt im Bereich des Behälters liegt.

## Claims

1. A sensor assembly (1) for monitoring filling heights of containers filled with liquids (3), a first and a second light barrier (6a, 6b) being provided, which are each mounted relative to a container located in a detection position at a detection height H which is matched to a desired filling height S of this container, wherein the first light barrier (6a) emits light beams (7a) with a light wavelength which has a significantly greater absorption for the liquid (3) than the light beams (7b) emitted by the second light barrier (6b) at a second light wavelength, and wherein, during the detection of the container in an evaluation unit, a joint evaluation of reception signals generated in the light barriers (6a, 6b) is carried out, 6b) or signals derived therefrom, **characterised in that** one or each light barrier (6a, 6b) is designed as a reflection light barrier having a transmitter (8a, 8b), a receiver (9a, 9b) and a reflector (11a, 11b), wherein the container is arranged between the transmitter (8a, 8b) and the receiver (9a, 9b) on the one hand and the reflector (11a, 11b) on the other hand, wherein the light beams (7a, 7b) cross at a crossing point, wherein the crossing point lies in the region of the container.

2. A sensor assembly (1) according to claim 1, **characterised in that** analogue received signals generated in the light barriers (6a, 6b) are fed to the output unit.

3. A sensor assembly (1) according to claim 1, **characterised in that** switching signals are generated in the light barriers (6a, 6b) as a function of the received signals, the switching signals being fed to the evaluation unit and logically linked there.

4. A sensor assembly (1) according to any one of claims 1 to 3, **characterised in that** the light barriers (6a, 6b) are arranged at the same detection height H.

5. A sensor assembly (1) according to one of claims 1to 4, **characterised in that** the light barriers (6a, 6b) are arranged at a detection height H which is just above or below the desired filling height S.

6. A sensor assembly (1) according to any one of claims 1 to 5, **characterised in that** the beam axes of the light beams (7a, 7b) of both light barriers (6a, 6b) extend at least approximately perpendicularly to the longitudinal axis of the container.

7. A sensor assembly (1) according to any one of claims 1 to 8, **characterised in that** each light barrier (6a, 6b) has a blocking filter which blocks light having the light wavelength of the respective other light barrier (6a, 6b).

8. A sensor assembly (1) according to one of claims 1 to 7, **characterised in that** the light barriers (6a, 6b) are activated in an aging manner by means of a control.

9. A sensor assembly (1) according to claim 8, **characterised in that** the controller forms the evaluation unit.

10. A sensor assembly (1) according to any one of claims 1 to 9, **characterised in that** the evaluation unit is formed by a computer unit of a cloud.

11. A sensor assembly (1) according to one of claims 9 or 10, **characterised in that** the light barriers (6a, 6b) can be parameterized via the controller or the computer unit of the cloud.

12. A sensor assembly (1) according to one of the claims 1 to 11, **characterised in that** several pairs of first and second light barriers (6a, 6b) at different detection heights H are provided.

13. A method for monitoring filling heights of containers filled with liquid (3) by means of a sensor assembly (1), a first and a second light barrier (6a, 6b) being provided which are each mounted relative to a container located in a detection position at a detection height H which is adapted to a desired filling height S of this container, the first light barrier (6a) emitting light beams (7a, 7b) at a light wavelength which has a significantly greater absorption for the liquid (3) than the light beams (7b) emitted by the second light barrier (6b) at a second light wavelength, and, during the detection of the container in an evaluation unit, a common evaluation of light beams (7b) emitted by the second light barrier (6b) at a second light wavelength being carried out, than the light beams (7b) emitted by the second light barrier (6b) at a second light wavelength, and wherein, during the detection of the container in an evaluation unit, a joint evaluation of received signals generated in the light barriers (6a, 6b) or signals derived therefrom takes place, **characterised in that** one or each light barrier (6a, 6b) is designed as a reflection light barrier (6a, 6b), 6b) is designed as a reflection light barrier having a transmitter (8a, 8b), a receiver (9a, 9b) and a reflector (11a, 11b), the container being arranged between the transmitter (8a, 8b) and the receiver (9a, 9b) on the one hand and the reflector (11a, 11b) on the other hand, the light beams (7a, 7b) intersecting at a point of intersection, the point of intersection being located in the region of the container.

## Revendications

1. Système de détection (1) pour surveiller les hauteurs de remplissage de récipients remplis de liquides (3), une première et une seconde barrière lumineuse (6a, 6b) étant prévues, qui sont chacune montées par rapport à un récipient situé dans une position de détection à une hauteur de détection H qui est adaptée à une hauteur de remplissage souhaitée S de ce récipient, dans lequel la première barrière lumineuse (6a) émet des faisceaux lumineux (7a) avec une longueur d'onde lumineuse qui a une absorption significativement plus grande pour le liquide (3) que les faisceaux lumineux (7b) émis par la seconde barrière lumineuse (6b) à une seconde longueur d'onde lumineuse, et dans lequel, pendant la détection du récipient dans une unité d'évaluation, une évaluation commune des signaux de réception générés dans les barrières lumineuses (6a, 6b) est effectuée, 6b) ou des signaux dérivés de ceux-ci, **caractérisé en ce qu'**une ou chaque barrière lumineuse (6a, 6b) est conçue comme une barrière lumineuse à réflexion avec un émetteur (8a, 8b), un récepteur (9a, 9b) et un réflecteur (11a, 11lb), le récipient étant disposé entre l'émetteur (8a, 8b) et le récepteur (9a, 9b) d'une part et le réflecteur (11a, 11b) d'autre part, les faisceaux lumineux (7a, 7b) se croisant à un point de croisement, le point de croisement se trouvant dans la zone du récipient.

2. Système de détection (1) selon la revendication 1, **caractérisé en ce que** les signaux analogiques reçus générés dans les barrières lumineuses (6a, 6b) sont envoyés à l'unité de sortie.

3. Système de détection (1) selon la revendication 1, **caractérisé en ce que** des signaux de commutation sont générés dans les barrières lumineuses (6a, 6b) en fonction des signaux reçus, les signaux de commutation étant envoyés à l'unité d'évaluation et y étant liés logiquement.

4. Système de détection (1) selon l'une quelconque des revendications 1 à 3, **caractérisé en ce que** les barrières lumineuses (6a, 6b) sont disposées à une même hauteur de détection H.

5. Système de détection (1) selon l'une des revendications 1 à 4, **caractérisé en ce que** les barrières lumineuses (6a, 6b) sont disposées à une hauteur de détection H qui est juste au-dessus ou au-dessous de la hauteur de remplissage S souhaitée.

6. Système de détection (1) selon l'une quelconque des revendications 1 à 5, **caractérisé en ce que** les axes des faisceaux lumineux (7a, 7b) des deux barrières lumineuses (6a, 6b) s'étendent au moins approximativement perpendiculairement à l'axe longitudinal du récipient.

7. Système de détection (1) selon l'une quelconque des revendications 1 à 8, **caractérisé en ce que** chaque barrière lumineuse (6a, 6b) comporte un filtre de blocage qui bloque la lumière ayant la longueur d'onde lumineuse de l'autre barrière lumineuse (6a, 6b) respective.

8. Système de détection (1) selon l'une des revendications 1 à 7, **caractérisé en ce que** les barrières lumineuses (6a, 6b) sont activées de manière vieillissante au moyen d'une commande.

9. Système de détection (1) selon la revendication 8, **caractérisé en ce que** le contrôleur forme l'unité d'évaluation.

10. Système de détection (1) selon l'une quelconque des revendications 1 à 9, **caractérisé en ce que** l'unité d'évaluation est formée par une unité informatique d'un nuage.

11. Système de détection (1) selon l'une des revendications 9 ou 10, **caractérisé en ce que** les barrières lumineuses (6a, 6b) sont paramétrables via le contrôleur ou l'unité informatique du nuage.

12. Système de détection (1) selon l'une des revendications 1 à 11, **caractérisé en ce que** plusieurs paires de première et seconde barrières lumineuses (6a, 6b) à des hauteurs de détection H différentes sont prévues.

13. Procédé pour surveiller les hauteurs de remplissage de récipients remplis de liquide (3) au moyen d'un système de détection (1), dans lequel il est prévu une première et une seconde barrière lumineuse (6a, 6b) qui sont montées chacune par rapport à un récipient se trouvant dans une position de détection à une hauteur de détection H qui est adaptée à une hauteur de remplissage souhaitée S de ce récipient, la première barrière lumineuse (6a) émettant des faisceaux lumineux (7a, 7b) à une longueur d'onde lumineuse qui présente une absorption pour le liquide (3) nettement supérieure à celle des faisceaux lumineux (7b) émis par la seconde barrière lumineuse (6b) à une seconde longueur d'onde lumineuse, et, pendant la détection du récipient dans une unité d'évaluation, une évaluation commune des faisceaux lumineux (7b) émis par la seconde barrière lumineuse (6b) à une seconde longueur d'onde lumineuse étant effectuée, que les faisceaux lumineux (7b) émis par la seconde barrière lumineuse (6b) à une seconde longueur d'onde lumineuse, et dans lequel, pendant la détection du récipient dans une unité d'évaluation, une évaluation commune des signaux reçus générés dans les - barrières lumineuses (6a, 6b) ou des signaux dérivés de celles-ci a lieu, **caractérisé en ce qu'**une ou chaque barrière lumineuse (6a, 6b) est conçue comme une barrière lumineuse à réflexion (6a, 6b), 6b) est conçu comme une barrière lumineuse à réflexion avec un émetteur (8a, 8b), un récepteur (9a, 9b) et un réflecteur (11a, 11b), le récipient étant disposé entre l'émetteur (8a, 8b) et le récepteur (9a, 9b) d'une part et le réflecteur (11a, 11b) d'autre part, les faisceaux lumineux (7a, 7b) se coupant en un point d'intersection, le point d'intersection se trouvant dans le côté intérieur du récipient.
